# EUROPÄISCHE PATENTSCHRIFT

(11) **EP 0 864 268 B1**
(45) Veröffentlichungstag und Bekanntmachung des Hinweises auf die Patenterteilung: **14.08.2002**
(21) Anmeldenummer: 98103406.9
(22) Anmeldetag: 27.02.1998
(51) Int. Cl.: A45D 20/30, H05B 1/02, F04D 17/00, F04D 19/00

(54) **Warmluftgerät**
Device for producing warm air, especially hair dryer
Dispositif pour produire de l'air chaud, séche-cheveux

(30) Priorität: 06.03.1997 DE 19709025
(43) Veröffentlichungstag der Anmeldung: 16.09.1998
(73) Patentinhaber: Wella Aktiengesellschaft, 64274 Darmstadt (DE)
(72) Erfinder: Liebeck, Martin, 64295 Darmstadt (DE)

(56) Entgegenhaltungen:
- AT-B- 329 164

## Beschreibung

Die Erfindung betrifft ein Warmluftgerät, insbesondere Haartrockner, mit einem Gebläsemotor und einer Heizung, die wenigstens zwei mittels Impulspaketsteuerung unabhängig voneinander ansteuerbare Heizwiderstände aufweist.

Bei derartigen Warmluftgeräten bzw. Wärmebehandlungsgeräten ist mittels einer zu einem Heizwiderstand in Reihe geschalteten Schaltung eine feinfühlige Regelung der Temperatur der abgegebenen Warmluft in Abhängigkeit eines vom Benutzer wählbaren Sollwertes möglich. Dazu wird die Temperatur der abgegebenen Warmluft mittels eines Temperaturfühlers erfaßt und mit dem gewählten Sollwert verglichen. Die zur Einhaltung des Temperatur-Sollwertes erforderliche Heizleistung wird durch eine sogenannte Impulspaketsteuerung realisiert. Die vom Heizwiderstand abgegebene Heizleistung wird dabei durch impulsartiges Ansteuern eines Schalters, beispielsweise eines Triac, für das Heizelement erreicht. Das Verhältnis der Impulsdauer, bei der die Heizung eingeschaltet ist, zur Impulsdauer, bei der die Heizung ausgeschaltet ist, bestimmt die effektive Heizleistung des Heizwiderstandes. Dieses Verhältnis kann zwischen Null und der maximalen Heizleistung beliebig variiert werden, wodurch eine feinfühlige Temperatursteuerung des Wärmebehandlungsgerätes möglich wird.

Moderne Wärmebehandlungsgeräte, wie etwa Haartrockner, haben zur Erzielung einer schnellen Trocknung vergleichsweise hohe Leistungen, die 1500 W oder auch 2000 Watt erreichen können. Werden derartig hohe Leistungen in kurzer Folge ein- und ausgeschaltet, so führt dies zu einer unerwünschten Spannungsrückwirkung auf das Stromnetz. Diese ist durch die sogenannte Flickernorm (DIN EN 61000-3-3) geregelt. Dabei sind mit zunehmender geschalteter Leistung größere minimale Abstände zwischen einzelnen Schaltvorgängen erforderlich. Bei einer zu schaltenden Leistung von ca. 1300 Watt ist beispielsweise eine Schaltzeit von mehr als 2,5 Sekunden erforderlich. Solche Schaltzeiten für die Heizung eines Wärmebehandlungsgerätes sind in der Praxis jedoch nachteilig, da sie die Zeitkonstante der Heizung um ein mehrfaches überschreiten und somit zu starken Temperaturschwankungen der Ausblastemperatur führen würden. Erst bei deutlich geringeren zu schaltenden Leistungen der Heizung würden die von der Flickernorm erlaubten Schaltzeiten so klein, daß eine feinfühlige Temperaturregelung möglich würde.

Aus der EP 0 468 240 B1 ist es daher bekannt, die Heizung des Wärmebehandlungsgerätes auf zwei Heizelemente mit unabhängiger Ansteuerung aufzuteilen und die Temperatursteuerung so auszubilden, daß ein gleichzeitiges Schalten der beiden Heizelemente verhindert wird. Schaltet jeweils nur ein Heizelement, so ist die geschaltete Leistung geringer und die erlaubten Schaltzeiten sind kürzer, so daß eine feinfühlige Temperatursteuerung ermöglicht wird. Diese bekannte Temperatursteuerung erfolgt dadurch, daß die Ansteuerung der beiden unabhängigen Heizelemente mittels zweier Referenzspannungen erfolgt, zu denen unterschiedliche Offset-Spannungen addiert werden, so daß die beiden Referenzwerte zu keinem Zeitpunkt identisch sind. Bei geringem Leistungsbedarf wird zunächst der erste Heizwiderstand mittels Impulspaketsteuerung betrieben und sobald die geforderte Wärmeleistung die Leistung eines Heizwiderstandes übersteigt, wird der zweite Heizwiderstand zugeschaltet und selbst im Impulspaketverfahren betrieben. Bei höheren Leistungen wird das erste Heizelement kontinuierlich angesteuert, so daß lediglich der zweite Heizwiderstand geschaltet wird. Dieses bekannte Temperatursteuerverfahren hat jedoch den Nachteil, daß die beiden Heizwiderstände unterschiedlich stark genutzt werden. Insbesondere muß der erste Heizwiderstand überwiegend mit voller Leistung betrieben werden, wodurch sich eine stärkere thermische Belastung und mögliche Verringerung der Lebensdauer des Warmluftgerätes ergibt. Ein weiterer Nachteil der bekannten Wärmeregelung liegt darin, daß zwei Spannungsquellen für unterschiedliche Offset-Spannungen erforderlich sind, was den gesamten Schaltungsaufbau aufwendiger und damit teurer macht.

Der vorliegenden Erfindung liegt daher die Aufgabe zugrunde, ein Warmluftgerät vorzuschlagen, bei dem eine feinfühlige Temperaturregulierung bei gleichzeitiger Einhaltung der Flickernorm möglich ist, wobei gleichzeitig die wenigstens zwei verwendeten unabhängigen Heizelemente gleichmäßig belastet sind.

Die Aufgabe wird gelöst durch ein wie in Anspruch 1 definiertes Warmluftgerät. Die wenigstens zwei Heizwiderstände werden asynchron mit voneinander unterschiedlichen Perioden angesteuert, so daß ein gleichzeitiges Schalten beider Heizwiderstände nur mit sehr großer Periode auftritt. So ist eine feinfühlige Temperaturregelung bei gleichzeitiger Einhaltung der Flickernorm möglich. Weiterhin erbringen im Zeitmittel die wenigstens zwei Heizwiderstände die gleiche Heizleistung, so daß eine übermäßige thermische Belastung eines Heizwiderstandes vermieden wird.

Das Warmluftgerät kann nach Anspruch 2 einen Temperaturfühler zur Ermittlung der Ist-Temperatur und einen Sollwertgeber zur Einstellung des Temperatur-Sollwertes aufweisen, wobei die Temperatursteuerung auf Basis des Vergleichs der beiden Werte erfolgt.
Bei einer Weiterbildung des erfindungsgemäßen Warmluftgerätes gemäß Anspruch 3 ist jedem Heizwiderstand ein Rampengenerator zugeordnet, der eine Rampenspannung mit für jeden Heizwiderstand jeweils unterschiedlicher Zeitkonstante erzeugt. Entweder der Temperatur-Sollwert oder der Temperatur-Istwert wird mit der Rampenspannung zur Ansteuerung des jeweiligen Heizwiderstandes moduliert. Diese erfindungsgemäße Ausbildung ermöglicht einen schaltungstechnisch einfachen Aufbau des erfindungsgemäßen Warmluftgerätes.

Der Schalter zum Ein- und Ausschalten der Heizwiderstände kann vorzugsweise als Triac ausgebildet werden. Gemäß einem bevorzugten Ausführungsbeispiel der Erfindung werden die Perioden der Rampenspannungen der jeweiligen Heizwiderstände so gewählt, daß ein gleichzeitiges Schalten der wenigstens zwei Heizwiderstände höchstens alle 12 Sekunden, vorzugsweise alle 20 Sekunden auftritt.

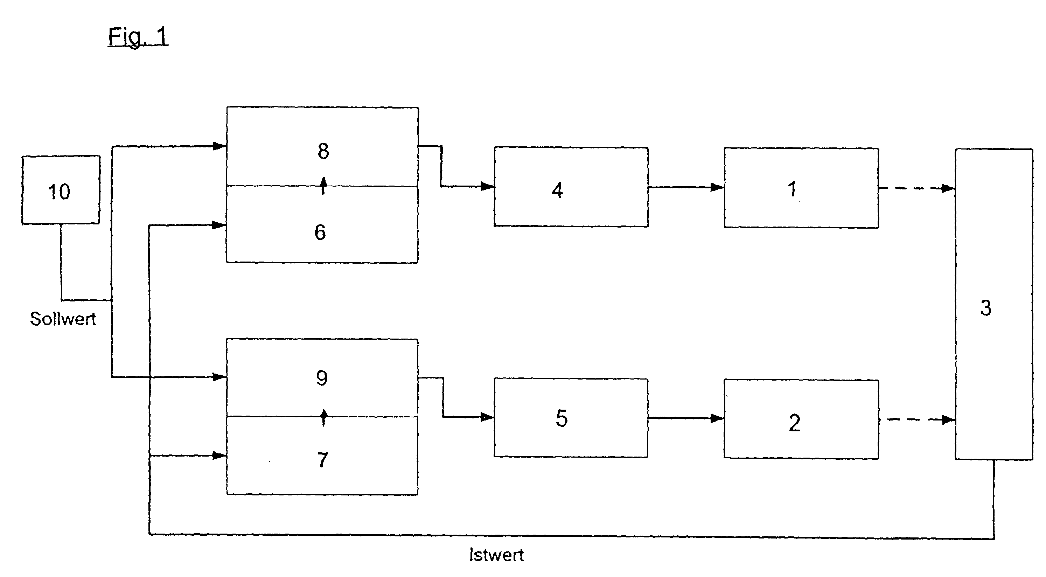

Ein Ausführungsbeispiel des erfindungsgemäßen Warmluftgerätes wird im folgenden anhand der beiliegenden Zeichnungen beschrieben, in denen
- Figur 1: eine schematische Blockdiagrammdarstellung der Temperaturregelung des erfindungsgemäßen Warmluftgerätes zeigt, und
- Figur 2A und 2B: Zeitablaufdiagramme zur Erläuterung der Funktionsweise der in Figur 1 gezeigten Temperaturregelung sind.

Das erfindungsgemäße Warmluftgerät weist in einem nicht dargestellten Gehäuse einen ebenfalls nicht dargestellten Gebläsemotor auf, dessen Leistung aber im Vergleich zur Heizleistung klein ist und dessen Steuerung daher keine Schwierigkeiten verursacht. Zur Heizung des ausgeblasenen Luftstrahles weist das Warmluftgerät zwei Heizwiderstände 1, 2 auf, die eine Maximalleistung von beispielsweise 650 Watt oder 750 Watt haben. Mittels eines an sich bekannten Temperaturfühlers 3 wird die Temperatur des ausgeblasenen Luftstrahles erfaßt und ein dementsprechender Temperatur-Istwert erzeugt. Mittels eines Sollwertgebers 10 kann der Benutzer die gewünschte Temperatur des Warmluftgerätes eingeben, wobei die Einstellung kontinuierlich oder stufenweise anhand einer Temperaturskala oder anhand geeigneter Symbole erfolgen kann. Je nach gewünschter Soll-Temperatur wird vom Sollwertgeber 10 ein Temperatur-Sollwert erzeugt. Dieser wird dem Komparator 8 des ersten Heizwiderstandes 1 und dem Komparator 9 des zweiten Heizwiderstandes 2 zugeführt. Der von dem Temperaturfühler 3 erzeugte Temperatur-Istwert wird dem ersten Rampengenerator 6 und dem zweiten Rampengenerator 7 zugeführt. Der Temperatur-Istwert wird mit der durch die Rampengeneratoren 6, 7 erzeugte Rampenspannung moduliert und durch die jeweiligen Komparatoren 8, 9 mit dem Temperatur-Sollwert verglichen. Dabei haben die durch die beiden Rampengeneratoren 6, 7 erzeugten Spannungsrampen eine geringfügig unterschiedliche Periode, beispielsweise 0,8 Sekunden und 0,75 Sekunden.

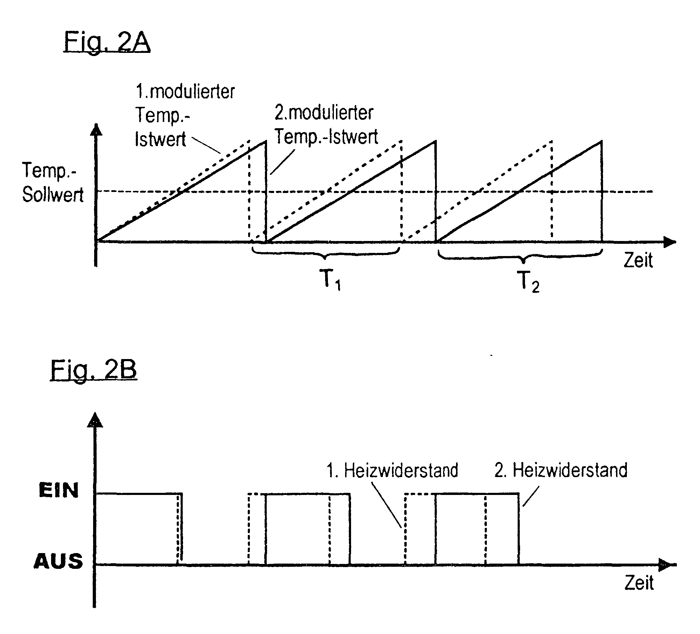

Der mit der ersten Rampenspannung modulierte Temperatur-Istwert ist in Figur 2A als gestrichelte Linie, der mit der zweiten Rampenspannung modulierte Temperatur-Istwert als durchgezogene Linie in Abhängigkeit von der Zeit dargestellt. Weiterhin ist als gestrichelte Linie der Temperatur-Sollwert gezeigt. Liegt der 1. modulierte Temperatur-Istwert unter dem Temperatur-Sollwert, so wird der Heizwiderstand 1 durch den ersten Triac 4 eingeschaltet (siehe Figur 2A). Liegt der durch die zweite Rampenspannung modulierte 2. Temperatur-Istwert unterhalb des gleichen Temperatur-Sollwertes, so schaltet der zweite Triac 5 den zweiten Heizwiderstand 2 ein. Fällt der Istwert durch Abfallen der Rampenspannung dann wieder unter den Sollwert, wird der jeweilige Heizwiderstand wieder ausgeschaltet. In Figur 2B sind die Einschalt- bzw. Ausschaltpulsdauern der beiden Heizwiderstände 1, 2 in Abhängigkeit von der Zeit dargestellt. Am Zeitnullpunkt des Diagramms werden beide Heizelemente 1 und 2 gleichzeitig eingeschaltet. Durch die asynchrone Ansteuerung beider Heizelemente verschieben sich die Einschalt- und Ausschaltpulse mit zunehmendem Zeitablauf zueinander, bis der Heizwiderstand, der mit der Rampenspannung mit der kurzen Zeitperiode angesteuert wird, den anderen Heizwiderstand einmal "überrundet hat". Im vorliegenden Beispiel einer Periode T₁ von 0,75 Sekunden und T₂ = 0,8 Sekunden erfolgt ein gleichzeitiges Schalten beider Heizelemente dann alle 12 Sekunden. Zur Einhaltung der Flickernorm ist daher für die Schaltung der gemeinsamen Heizleistung beider Heizwiderstände die sich ergebende lange Periode (im vorliegenden Beispiel 12 Sekunden) maßgeblich. Für das Ansprechverhalten der Temperaturregelung ist jedoch die kurze Periode von 0,8 Sekunden bzw. 0,75 Sekunden maßgeblich. Wie aus Figur 2B deutlich wird, sind die Ein- bzw. Ausschaltperioden beider Heizelemente ungefähr gleich groß, so daß beide Heizelemente ungefähr gleich stark belastet werden.

Das erfindungsgemäße Warmluftgerät weist weiterhin einen insgesamt einfachen Schaltungsaufbau zur feinfühligen Regelung der Temperatur bei gleichzeitiger Einhaltung der Flickernorm zur Begrenzung der Spannungsrückführung in das Netz auf.

## Patentansprüche

1. Warmluftgerät, insbesondere Haartrockner, mit einem Gebläsemotor und einer Heizung, die wenigstens zwei mittels Impulspaketsteuerung unabhängig voneinander ansteuerbare Heizwiderstände (1, 2) aufweist, **dadurch gekennzeichnet, daß** die Ansteuerung der Heizwiderstände (1, 2) asynchron und bei jedem Heizwiderstand mit unterschiedlicher Periode erfolgt.

2. Warmluftgerät nach Anspruch 1, **dadurch gekennzeichnet, daß** ein Temperaturfühler (3) zur Ermittlung eines Temperatur-Istwertes und ein Sollwertgeber (10) zur Einstellung eines Temperatur-Sollwertes vorgesehen sind und daß die Ansteuerung der wenigstens zwei Heizwiderstände (1, 2) durch Vergleich des Temperatur-Istwertes mit dem Temperatur-Sollwert erfolgt.

3. Warmluftgerät nach Anspruch 2, **dadurch gekennzeichnet, daß** jedem Heizwiderstand (1, 2) ein Rampengenerator (6, 7) zugeordnet ist, der eine Rampenspannung mit für jeden Heizwiderstand (1, 2) unterschiedlicher Zeitkonstante erzeugt, wobei der Temperatur-Sollwert oder der Temperatur-Istwert zur Ansteuerung eines Heizwiderstandes (1, 2) mit der zugehörigen Rampenspannung moduliert wird.

4. Warmluftgerät nach einem der Ansprüche 1 bis 3, **dadurch gekennzeichnet, daß** zur Ansteuerung jedes der wenigstens zwei Heizwiderstände (1, 2) ein Triac (4, 5) vorgesehen ist.

5. Warmluftgerät nach einem der Ansprüche 1 bis 4, **dadurch gekennzeichnet, daß** die Rampenperioden der Rampengeneratoren (6, 7) so gewählt sind, daß ein gleichzeitiges Schalten von wenigstens zwei der Heizwiderständen (1, 2) unabhängig von der gewählten Soll-Temperatur höchstens alle 12 Sekunden, vorzugsweise alle 20 Sekunden auftritt.

## Claims

1. Hot-air device, in particular hairdryer, with a blower motor and a heating system which has at least two heating resistors (1, 2), which can be activated independently of one another by means of burst firing control, **characterized in that** the activation of the heating resistors (1, 2) takes place asynchronously and with a different period for each heating resistor.

2. Hot-air device according to Claim 1, **characterized in that** a temperature detector (3) for determining an actual temperature value and a desired-value transmitter (10) for setting a desired temperature value are provided and **in that** the activation of the at least two heating resistors (1, 2) is accomplished by comparison of the actual temperature value with the desired temperature value.

3. Hot-air device according to Claim 2, **characterized in that** each heating resistor (1, 2) is assigned a ramp generator (6, 7), which produces a ramp voltage with a different time constant for each heating resistor (1, 2), the desired temperature value or actual temperature value being modulated with the associated ramp voltage for the purpose of activating a heating resistor (1, 2).

4. Hot-air device according to one of Claims 1 to 3, **characterized in that** a triac (4, 5) is provided for the purpose of activating each of the at least two heating resistors (1, 2).

5. Hot-air device according to one of Claims 1 to 4, **characterized in that** the ramp periods of the ramp generators (6, 7) are chosen in such a way that simultaneous switching of at least two of the heating resistors (1, 2) takes place not more than every 12 seconds, preferably every 20 seconds, irrespective of the desired temperature chosen.

## Revendications

1. Dispositif pour produire de l'air chaud, notamment sèche-cheveux, muni d'un moteur de soufflerie et d'un dispositif de chauffage, lequel présente au moins deux résistances chauffantes (1, 2) pouvant être commandées indépendamment l'une de l'autre par une commande par trains d'impulsions, **caractérisé en ce que** la commande des résistances chauffantes (1, 2) est réalisée de manière asynchrone et à une période différente pour chaque résistance chauffante.

2. Dispositif pour produire de l'air chaud selon la revendication 1, **caractérisé en ce qu'**une sonde de température (3) destinée à déterminer la valeur réelle de la température et un générateur de valeur de consigne (10) destiné à régler une valeur de consigne de 1a température sont prévus et que la commande des au moins deux résistances chauffantes (1, 2) est réalisée en comparant la valeur réelle de la température à la valeur de consigne de la température.

3. Dispositif pour produire de l'air chaud selon la revendication 2, **caractérisé en ce qu'**un générateur de rampe (6, 7) est associé à chaque résistance chauffante (1, 2), lequel génère une tension de rampe ayant une constante de temps différente pour chaque résistance chauffante (1, 2), la valeur de consigne de la température ou la valeur réelle de la température étant modulée pour commander une résistance chauffante (1, 2) avec la tension de rampe correspondante.

4. Dispositif pour produire de l'air chaud selon l'une des revendications 1 à 3, **caractérisé en ce qu'**un triac (4, 5) est prévu pour commander chacune des au moins deux résistances chauffantes (1, 2).

5. Dispositif pour produire de l'air chaud selon l'une des revendications 1 à 4, **caractérisé en ce que** les périodes de rampe des générateurs de rampe (6, 7) sont choisies de manière à ce qu'il se produise une commutation simultanée d'au moins deux des résistances chauffantes (1, 2) indépendamment de la température de consigne choisie au maximum toutes les 12 secondes, de préférence toutes les 20 secondes.
